# EUROPEAN PATENT APPLICATION

(11) **EP 2 922 354 A1**
(43) Date of publication of application: **23.09.2015**
(21) Application number: 13854601.5
(22) Date of filing: 17.09.2013
(51) Int. Cl.: H04W 56/00

(54) **METHOD AND DEVICE FOR DISTRIBUTING CODE OFFSET**

(30) Priority: 19.11.2012 CN 201210469512
(71) Applicant: ZTE Corporation, Shenzhen, Guangdong 518057 (CN)
(72) Inventor: LIU, Lu, Shenzhen Guangdong 518057 (CN); WANG, Chen, Shenzhen Guangdong 518057 (CN); DING, Jiewei, Shenzhen Guangdong 518057 (CN)
(74) Representative: Mozzi, Matteo
(86) International application number: PCT/CN2013/083644
(87) International publication number: WO 2014/075506

(57) **Abstract**

A method and device for distributing a code offset are provided. The method includes: an RNC equally dividing the access time of a user equipment into one or more sets of access time which are not overlapped with one another, wherein each set of access time comprises one or more timeslots; and the RNC distributing a corresponding code offset τ_{DPCH} or τ_{F-DPCH} according to the type of the user equipment, wherein the τ_{DPCH} or τ_{F-DPCH} is located in the above-mentioned timeslot in the above-mentioned access time of the above-mentioned user equipment. The present invention solves the problem in the related art that a method for aligning uplink subframe boundaries brings a relatively large influence on the performance of a downlink, and the uplink subframe boundaries of which TDM UEs reach a Node B to be aligned as much as possible, thereby reducing the interference among the TDM UEs, improving the system throughput, and being unable to severely affect the performance of the downlink as well.

## Description

### Technical Field

The present invention relates to the field of communication, including, e.g., a method and device for allocating a code offset.

### Background

In a wideband code division multiple access (referred to as WCDMA) radio communication network, even though in the same cell, user equipments (referred to as UEs) are not mutually orthogonal, resulting in interference between each other. When a large number of UEs access a system in a code division multiplexing (referred to as CDM) manner, the interference among the UEs will severely reduce the performance of the system. A high speed uplink packet access (referred to as HSUPA) is a technique for enhancing the uplink transmission capability of the WCDMA. The HSUPA technique comprises a shorter transmission time interval (referred to as TTI), a scheduler based on a Node B, and a hybrid automatic retransmission request (referred to as HARQ) technique. Since the HSUPA of 2 ms TTI provides an activation and deactivation mechanism based on a single HARQ process; however, 10 ms TTI does not provide the activation and deactivation mechanism based on a single HARQ process. Therefore, emitting time of these high speed UEs can be staggered by configuring different HARQ process activation templates for different high speed UEs of 2 ms TTI, so as to realize a time division multiplex (referred to as TDM) manner of the high speed UEs of 2 ms TTI, and other UEs maintain the CDM manner unchanged. Thereby, the interference at the same time among the UEs can be greatly reduced, improving the throughput performance of the system.

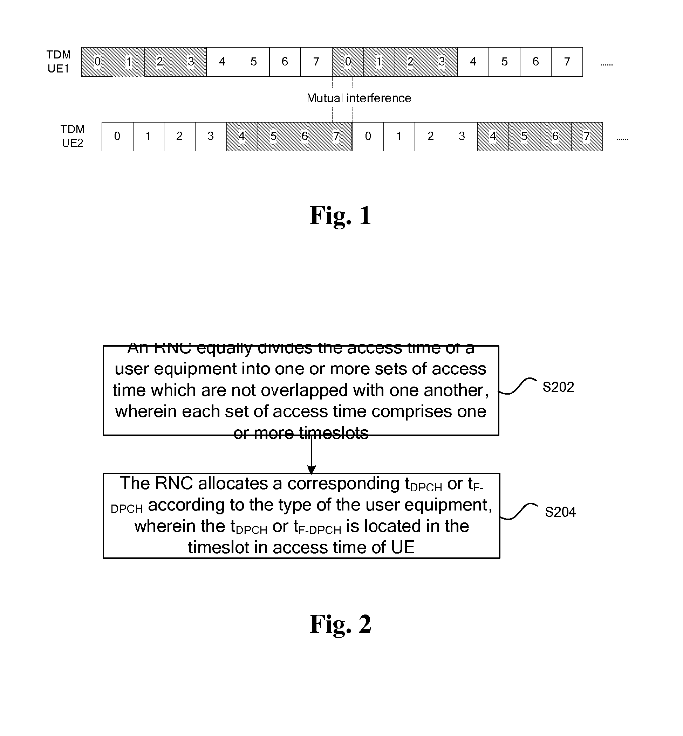

However, in order to further reduce the interference among the TDM UEs, it is required to ensure, to some extent, the uplink subframe boundaries of which the TDM UEs reach the Node B is to be aligned. Otherwise, some interferences still exists among the TDM UEs. Fig. 1 is a schematic diagram that the uplink subframe boundaries of two TDM UEs reach the Node B are aligned according to the related art, an HARQ process of a TDM UE1 and an HARQ process of a TDM UE2 as shown in Fig. 1; and in Fig. 1, oblique line boxes indicate an active HARQ process, and blank boxes indicate an inactive HARQ process. When the HARQ process 0 of the TDM UE1 and the HARQ process 7 of the TDM UE2 reach the Node B, it is partially overlapped, and the TDM UEs interfere with one another.

According to protocol 25.211, there is a fixed timing relationship between uplink and downlink channels. Therefore, there are mainly two factors of determining whether the uplink subframe boundaries of which the UEs reach the Node B are aligned or not: the first factor is a round trip delay of radio transmission; and the other factor is a code offset τ_{DPCH} or τ_{F-DPCH}, with τ_{DPCH} or τ_{F-DPCH} = T × 256 chip and T ∈ {0, 1, ..., 149}, allocated to each UE when an radio link of a radio network controller (referred to as RNC) is established, and different UE may be provided with different a τ_{DPCH} or τ_{F-DPCH} configuration. If a dedicated physical control channel (referred to as DPCCH) and a dedicated physical data channel (referred to as DPDCH) are used in a downlink, the τ_{DPCH} is allocated; and if a high speed physical downlink shared channel (referred to as HS-PDSCH) and a fractional dedicated physical channel (referred to as F-DPCH) is used in the downlink, the τ_{F-DPCH} is allocated.

With regard to the above-mentioned first factor, the round trip delay of the radio transmission is determined by a radius size of a cell, and is not controlled artificially. With regard to the other factor, one feasible method is to adjust the τ_{DPCH} or τ_{F-DPCH}of UEs so as to enbable the uplink subframe boundaries of which the UEs reach the Node B are aligned as much as possible. If all the τ_{DPCH} or τ_{F-DPCH} of the UEs are configured to be the same, or be different by a multiple of 2 ms, with regard to a cell with a radius being 10 km, an aligning difference of the uplink subframe boundaries of which the UEs reach the Node B will be limited within 256 chips. With regard to UEs which supports an enhanced fractional dedicated physical channel (referred to as F-DPCH), τ_{DPCH} or τ_{F-DPCH} of the UEs can be configured to be the same, or be different by a multiple of 2 ms. However, with regard to UEs which does not support the enhanced F-DPCH, when τ_{DPCH} or τ_{F-DPCH} of the UEs are configures to be the same, or be different by a multiple of 2 ms, the same symbol of a pilot domain of the DPCCH channel will be emitted at the same time (using the DPCCH and DPDCH in a downlink), resulting in a downlink peak average ratio increased, or declining the multiplex chance of a downlink code resource (using the F-DPCH and HS-PDSCH in the downlink), and severely affecting the performance of the downlink.

With regard to the problem in the related art that a method for aligning uplink subframe boundaries brings a relatively large influence on the performance of a downlink, no effective solution has been proposed so far.

### Summary

With regard to the problem in the related art that a method for aligning uplink subframe boundaries brings a relatively large influence on the performance of a downlink, a method and device for allocating a code offset are provided in the present invention, so as to at least solve the above-mentioned problem.

According to one aspect of the present invention, a method for allocating a code offset is provided. The method comprises: an Radio Network Controller (RNC) equally dividing the access time of a user equipment (UE) into one or more sets of access time which are not overlapped with one another, wherein each set of access time comprises one or more timeslots; and the RNC allocating a corresponding τ_{DPCH} or τ_{F-DPCH} according to the type of the UE, wherein the τ_{DPCH} or τ_{F-DPCH} is located in the timeslot in the access time of the UE.

Before the RNC allocates the τ_{DPCH} or τ_{F-DPCH} for different types of the UE accordingly, the method further comprises: the RNC classifying the UE according to a capability grade and/or service type of the UE.

The capability grade comprises one of the following types: supporting an enhanced F-DPCH, and not supporting the enhanced F-DPCH; and/or the service type comprises one of the following types: a 2 ms TTI E-DCH, a 10 ms TTI E-DCH, and an R99.

The RNC allocating the corresponding τ_{DPCH} or τ_{F-DPCH} according to the type of the UE comprises: based on that the capability grade of the UE is the supporting the enhanced F-DPCH and the service type is the 2 ms TTI E-DCH or the 10 ms TTI E-DCH, the τ_{DPCH} or τ_{F-DPCH} which is allocated for the UE by the RNC is evenly distributed in a header of a first timeslot of any set of access time.

The RNC allocating the corresponding τ_{DPCH} or τ_{F-DPCH} according to the type of the UE further comprises: based on that the capability grade of the UE is the not supporting the enhanced F-DPCH and the service type is the 2 ms TTI E-DCH, the τ_{DPCH} or τ_{F-DPCH} which is allocated for the UE by the RNC is evenly distributed in a first timeslot of any set of access time.

The RNC allocating the corresponding τ_{DPCH} or τ_{F-DPCH} according to the type of the UE further comprises: based on that the capability grade of the UE is the not supporting the enhanced F-DPCH and the service type is the 10 ms TTI E-DCH, the τ_{DPCH} or τ_{F-DPCH} which is allocated for the UE by the RNC is evenly distributed in a first timeslot of any set of access time, or evenly distributed in any timeslot apart from the first timeslot of any set of access time.

The RNC allocating the corresponding τ_{DPCH} or τ_{F-DPCH} according to the type of the UE further comprises: based on that the service type of the UE is the R99, the τ_{DPCH} or τ_{F-DPCH} which is allocated for the UE by the RNC is evenly distributed in a first timeslot of any set of access time, or evenly distributed in any timeslot apart from the first timeslot of any set of access time.

According to another aspect of the present invention, a device for allocating a code offset is provided. The device comprises: an access time equally dividing component, configured to equally divide the access time of a UE into one or more sets of access time which are not overlapped with one another, wherein each set of access time comprises one or more timeslots; and an allocating component, configured to allocate a corresponding τ_{DPCH} or τ_{F-DPCH} according to the type of the UE, wherein the τ_{DPCH} or τ_{F-DPCH} is located in the timeslot in the access time of the UE.

The device further comprises: a classifying component, configured to classify the UE according to a capability grade and/or a service type of the UE.

The capability grade comprises one of the following types: supporting an enhanced F-DPCH, and not supporting the enhanced F-DPCH; and/or the service type comprises one of the following types: an 2 ms TTI E-DCH, an 10 ms TTI E-DCH, and an R99.

The allocating component comprises: a first allocating component, configured to be that, based on that the capability grade of the UE is the supporting the enhanced F-DPCH and the service type is the 2 ms TTI E-DCH or the 10 ms TTI E-DCH, the τ_{DPCH} or τ_{F-DPCH} which is allocated for the UE is evenly distributed in a header of a first timeslot of any set of access time.

The allocating component further comprises: a second allocating component, configured to be that, based on that the capability grade of the UE is the not supporting the enhanced F-DPCH and the service type is the 2 ms TTI E-DCH, the τ_{DPCH} or τ_{F-DPCH} which is allocated for the UE is evenly distributed in a first timeslot of any set of access time.

The allocating component further comprises: a third allocating component, configured to be that, based on that the capability grade of the UE is the not supporting the enhanced F-DPCH and the service type is the 10 ms TTI E-DCH, the τ_{DPCH} or τ_{F-DPCH} which is allocated for the UE is evenly distributed in a first timeslot of any set of access time, or evenly distributed in any timeslot apart from the first timeslot of any set of access time.

The allocating component further comprises: a fourth allocating component, configured to be that, based on that the service type of the UE is the R99, the τ_{DPCH} or τ_{F-DPCH} which is allocated for the UE being evenly distributed in a first timeslot of any set of access time, or evenly distributed in any timeslot apart from the first timeslot of any set of access time.

In the present invention, an RNC equally divides the access time of a UE into one or more sets of access time which are not overlapped with one another, wherein each set of access time comprises one or more timeslots; and the RNC allocates a corresponding τ_{DPCH} or τ_{F-DPCH} according to the type of the UE. It solves the problem in the related art that a method for aligning uplink subframe boundaries brings a relatively large influence on the performance of a downlink, and the uplink subframe boundaries of which TDM UEs reach a Node B to be aligned as much as possible, thereby reducing the interference among the TDM UEs, improving the system throughput, and being unable to severely affect the performance of the downlink as well.

### Brief Description of the Drawings

Drawings, provided for further understanding of the present invention and forming a part of the specification, are used to explain the present invention together with embodiments of the present invention rather than to limit the present invention. In the accompanying drawings:
Fig. 1 is a schematic diagram that the uplink subframe boundaries of which two TDM UEs reach the Node B are aligned according to the related art;
Fig. 2 is a flow diagram of a method for allocating a code offset according to an embodiment of the present invention;
Fig. 3 is a flow diagram of a method for allocating a code offset of a UE according to an embodiment of the present invention;
Fig. 4 is an illustrative diagram of access time grouping of a UE according to an embodiment of the present invention;
Fig. 5 is a structural block diagram of a device for allocating a code offset according to an embodiment of the present invention;
Fig. 6 is a first particular structural block diagram of a device for allocating a code offset according to an embodiment of the present invention; and
Fig. 7 is a second particular structural block diagram of a device for allocating a code offset according to an embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

On the premise that the uplink subframe boundaries of which TDM UEs reach the Node B is aligned as much as possible, in order to be able to not bring a severe influence on the performance of the downlink, a method and device for allocating a code offset are provided in an embodiment of the present invention; and it will be described in detail according to an embodiment hereinafter.

A method for allocating a code offset is provided in the embodiment of the present invention, and Fig. 2 is a flow diagram of a method for allocating a code offset according to an embodiment of the present invention. As shown in Fig. 2, the method comprises the following steps (step S202-step S204):
Step S202, an RNC equally divides the access time of a UE into one or more sets of access time which are not overlapped with one another, wherein each set of access time comprises one or more timeslots; and
Step S204, the RNC allocates a corresponding τ_{DPCH} or τ_{F-DPCH} according to the type of the UE, wherein the τ_{DPCH} or τ_{F-DPCH} is located in the timeslot in access time ofUE.

In the method, an RNC equally divides the access time of a UE into one or more sets of access time which are not overlapped with one another, wherein each set of access time comprises one or more timeslots; and the RNC allocates a corresponding τ_{DPCH} or τ_{F-DPCH} according to the type of the UE. It solves the problem in the related art that a method for aligning uplink subframe boundaries brings a relatively large influence on the performance of a downlink, and the uplink subframe boundaries of which TDM UEs reach a Node B to be aligned as much as possible, thereby reducing the interference among the TDM UEs, improving the system throughput, and being unable to severely affect the performance of the downlink as well.

The τ_{DPCH} is a code offset of a downlink dedicated physical channel (referred to as DPCH, which comprises a DPCCH channel and a DPDCH channel) frame and a downlink primary common control physical channel (referred to as P-CCPCH) frame. The τ_{F-DPCH} is a code offset of a downlink F-DPCH frame and a downlink P-CCPCH frame. With regard to different UEs in the same cell, the starting points of the downlink P-CCPCH frame are the same; however, the starting point of the downlink DPCH or F-DPCH frame is determined via the offset τ_{DPCH} or τ_{F-DPCH} of each UE.

Before the RNC allocates the τ_{DPCH} or τ_{F-DPCH} for different types of the UE accordingly, the method can further comprise: the RNC classifyes the UE according to a capability grade and/or a service type of the UE.

The capability grade can comprise one of the following types: supporting an enhanced F-DPCH, and not supporting the enhanced F-DPCH; and/or the service type can comprise one of the following types: an 2 ms TTI E-DCH, an 10 ms TTI E-DCH, and an R99.

The 2 ms TTI E-DCH refers to a service using an E-DCH transmission channel of a 2 ms TTI in an uplink; the 10 ms TTI E-DCH refers to a service using an E-DCH transmission channel of a 10 ms TTI in an uplink; and the R99 refers to a service using a DCH transmission channel in an uplink.

Corresponding to the capability grade and service type introduced in the foregoing, the RNC allocating the corresponding τ_{DPCH} or τ_{F-DPCH} according to the type of the UE can be achieved by the following preferred embodiments:
In a first preferred embodiment, based on that the capability grade of the UE is the supporting the enhanced F-DPCH and the service type is the 2 ms TTI E-DCH or the 10 ms TTI E-DCH, the τ_{DPCH} or τ_{F-DPCH} which is allocated for the UE by the RNC is evenly distributed in a header of a first timeslot of any set of access time.

In a second preferred embodiment, based on that the capability grade of the UE is the not supporting the enhanced F-DPCH and the service type is the 2 ms TTI E-DCH, the τ_{DPCH} or τ_{F-DPCH} which is allocated for the UE by the RNC is evenly distributed in a first timeslot of any set of access time.

In a third preferred embodiment, based on that the capability grade of the UE is the not supporting the enhanced F-DPCH and the service type is the 10 ms TTI E-DCH, the τ_{DPCH} or τ_{F-DPCH} which is allocated for the UE by the RNC is evenly distributed in a first timeslot of any set of access time, or evenly distributed in any timeslot apart from the first timeslot of any set of access time.

In a fourth preferred embodiment, based on that the service type of the UE is the R99, the τ_{DPCH} or τ_{F-DPCH} which is allocated for the UE by the RNC is evenly distributed in a first timeslot of any set of access time, or evenly distributed in any timeslot apart from the first timeslot of any set of access time.

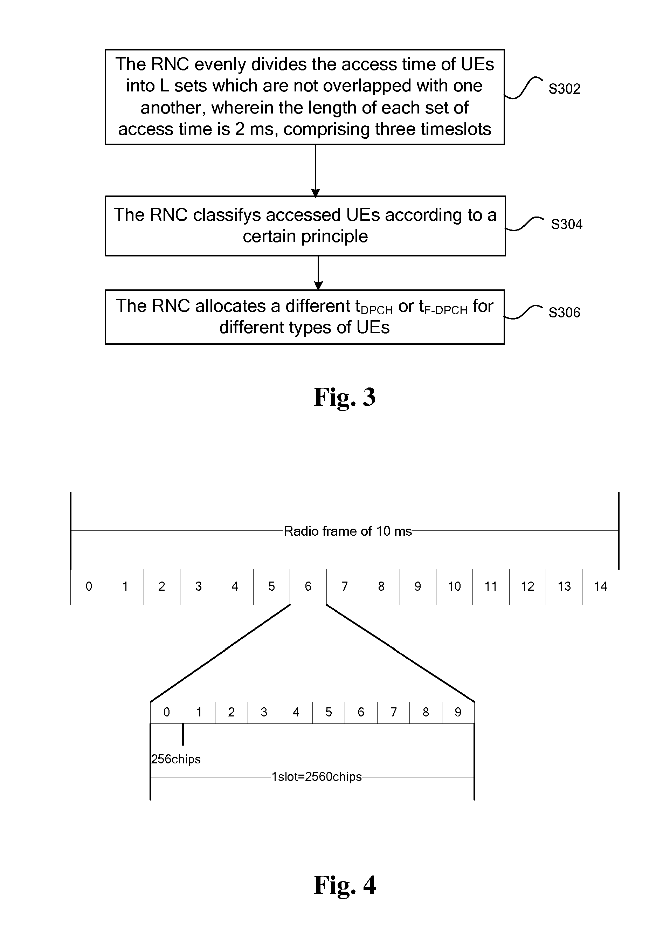

The method for allocating a τ_{DPCH} or τ_{F-DPCH} of a UE is described in detail in the following embodiments, and Fig. 3 is a flow diagram of a method for allocating a code offset of a UE according to an embodiment of the present invention. As shown in Fig. 3, the method comprises the following steps (step S302-step S306):
Step S302, the RNC evenly divides the access time of UEs into L sets which are not overlapped with one another, wherein the length of each set of access time is 2 ms, comprising three timeslots. Certainly, a value of L can be set according to an actual situation. The length of each set of access time can also be set according to an actual situation. Preferably, the length of each set of access time can be set to be 2 ms.

Fig. 4 is an illustrative diagram of access time grouping of a UE according to an embodiment of the present invention. As shown in Fig. 4, a radio frame of a 10 ms is evenly divided into L sets which are not overlapped with one another (the embodiment is described with the example of L = 5), such as, taking 0, 1, and 2 as a set, taking 3, 4, and 5 as a set, and so on. The length of each set of access time is 2 ms, comprising three timeslots. The length of each timeslot is 2560 chips; and taking 256 chips as a granularity boundary, 10 different τ_{DPCH}s or τ_{F-DPCD}s can be allocated; therefore, each set of access time can allocate 3 × 10 different τ_{DPCH}s or τ_{F-DPCH}s.

Step S304, the RNC classifys accessed UEs according to a certain principle. The principle of classifying the UEs can be judged according to the following factors: a capability grade of a UE, or a service type of the UE, or a combination of the two factors.

Step S306, the RNC allocates a different τ_{DPCH} or τ_{F-DPCH} for different types of UEs.

The τ_{DPCH} or τ_{F-DPCH} allocated for different types of UEs satisfies the following principles:
With regard to a UE which supports an enhanced F-DPCH and whose service type is a 2 ms TTI and a 10 ms TTI, the allocated τ_{DPCH} or τ_{F-DPCH} is evenly distributed in a header of a first timeslot of any set of access time.

With regard to a UE which does not support an enhanced F-DPCH and whose service type is a 2 ms TTI, the allocated τ_{DPCH} or τ_{F-DPCH} is evenly distributed in a first timeslot of any set of access time.

With regard to a UE which does not support an enhanced F-DPCH and whose service type is a 10 ms TTI, the allocated τ_{DPCH} or τ_{F-DPCH} is evenly distributed in a first timeslot of any set of access time, or evenly distributed in any timeslot apart from the first timeslot of any set of access time.

With regard to a UE whose service type is an R99, the allocated τ_{DPCH} or τ_{F-DPCH} is evenly distributed in a first timeslot of any set of access time, or evenly distributed in any timeslot apart from the first timeslot of any set of access time.

The embodiments of the present invention are further introduced via an embodiment of allocating a τ_{DPCH} or τ_{F-DPCH} for a UE in a HSUPA system.

For example, there are four UEs in a cell; UE1 supports an enhanced F-DPCH, with a service type being an 2 ms TTI E-DCH; UE2 does not support an enhanced F-DPCH, with a service type being an 2 ms TTI E-DCH, UE3 does not support an enhanced F-DPCH, with a service type being an 10 ms TTI E-DCH; and a service type of UE4 is an R99.

A radio frame of a 10 ms is divided into L (L = 5) sets which are not overlapped with one another, wherein the length of each set of access time is 2 ms, comprising three timeslots. The length of each timeslot is 2560 chips; and taking 256 chips as a granularity boundary, 10 different τ_{DPCH}s or τ_{F-DPCD}s can be allocated. Therefore, each set of access time can allocate 3 × 10 different τ_{DPCH}s or τ_{F-DPCH}s.

The RNC classifies accessed UEs according to a certain principle. In the present embodiment, a capability grade of a UE and a service type of a UE are considered comprehensively to classify UEs. Four UEs in the present embodiment are divided into four types.

UE1 is a type of UE supporting an enhanced F-DPCH, with a service type being an 2 ms TTI E-DCH; UE2 is a type of not supporting an enhanced F-DPCH, with a service type being an 2 ms TTI E-DCH, UE3 is a type of UE not supporting an enhanced F-DPCH, with a service type being an 10 ms TTI E-DCH; and UE4 is a type of UE with a service type being an R99.

Then, the RNC allocates a different τ_{DPCH} or τ_{F-DPCH} for different types of UEs. Particularly:
UE1 is a type of UE supporting an enhanced F-DPCH, with a service type being an 2 ms TTI E-DCH, and the τ_{DPCH} or τ_{F-DPCH} which is allocated for UE1 by the RNC is evenly distributed in a header of a first timeslot of any set of access time. Herein, it is assumed that the τ_{DPCH} or τ_{F-DPCH} which is allocated for UE1 by the RNC is a header of a first timeslot of a second set of access time, i.e. τ_{DPCH} = (3 × 2560) chips.

UE2 is a type of UE not supporting an enhanced F-DPCH, with a service type being an 2 ms TTI E-DCH, and the τ_{DPCH} or τ_{F-DPCH} which is allocated for UE2 by the RNC is evenly distributed in a first timeslot of any set of access time. Herein, it is assumed that the τ_{DPCH} or τ_{F-DPCH} which is allocated for UE2 by the RNC is a third place of a first timeslot of a fourth set of access time, i.e. τ_{DPCH} or τ_{F-DPCH} = (9 × 2560 + 2 × 256) chips.

UE3 is a type of UE not supporting an enhanced F-DPCH, with a service type being an 10 ms TTI E-DCH, and the allocated τ_{DPCH} or τ_{F-DPCH} which is allocated for UE3 by the RNC is evenly distributed in a first timeslot of any set of access time, or evenly distributed in any timeslot apart from the first timeslot of any set of access time. Herein, it is assumed that the τ_{DPCH} or τ_{F-DPCH} which is allocated for UE3 by the RNC is a seventh place of a first timeslot of a first set of access time, i.e. τ_{DPCH} or τ_{F-DPCH} =(6 × 256) chips.

UE4 is a type of UE with a service type being an R99, and the τ_{DPCH} or τ_{F-DPCH} which is allocated for UE4 by the RNC is evenly distributed in a first timeslot of any set of access time, or evenly distributed in any timeslot apart from the first timeslot of any set of access time. Herein, it is assumed that the τ_{DPCH} or τ_{F-DPCH} which is allocated for UE4 by the RNC is a fifth place of a third timeslot of a fifth set of access time, i.e. τ_{DPCH} or τ_{F-DPCH} = (14 × 2560 + 4 × 256) chips.

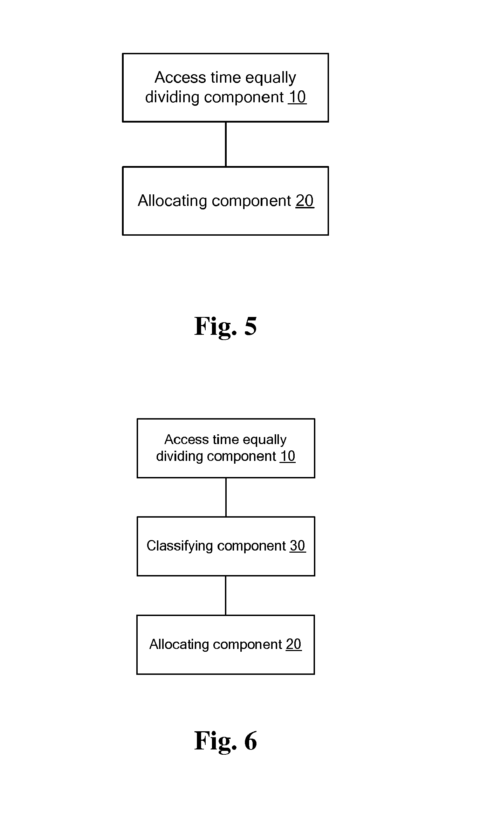

On the basis of the method for allocating a code offset introduced in the embodiment, a device for allocating a code offset is provided in the present embodiment, and the device is used for implementing the embodiment. Fig. 5 is a structural block diagram of a device for allocating a code offset according to an embodiment of the present invention. As shown in Fig. 5, the device comprises: an access time equally dividing component **10** and an allocating component **20.** The structure is introduced in details below.

An access time equally dividing component **10,** is configured to equally divide the access time of a UE into one or more sets of access time which are not overlapped with one another, wherein each set of access time comprises one or more timeslots; and
an allocating component **20,** connected to the access time equally dividing component **10,** is configured to allocate a corresponding τ_{DPCH} or τ_{F-DPCH} according to the type of the UE, wherein the τ_{DPCH} or τ_{F-DPCH} is located in timeslot in access time of UE.

By the device, the access time equally dividing component **10** equally divides the access time of a UE into one or more sets of access time which are not overlapped with one another, wherein each set of access time comprises one or more timeslots; and the allocating component **20** allocates a corresponding τ_{DPCH} or τ_{F-DPCH} according to the type of the UE. It solves the problem in the related art that a method for aligning uplink subframe boundaries brings a relatively large influence on the performance of a downlink, and the uplink subframe boundaries of which TDM UEs reach a Node B to be aligned as much as possible, thereby reducing the interference among the TDM UEs, improving the system throughput, and being unable to severely affect the performance of the downlink as well.

Before an RNC allocates the τ_{DPCH} or τ_{F-DPCH} for different types of the UE accordingly, the RNC needs to classify the UE firstly. Therefore, the present embodiment provides a preferred embodiment. It is a first particular structural block diagram of a device for allocating a code offset as shown in Fig. 6, and the device further comprises a classifying component 30 aside from comprising the each component introduced in Fig. 5. The structure is introduced in details below.

A classifying component **30,** connected to the access time equally dividing component **10** and the allocating component **20,** is configured to classify the UE according to a capability grade and/or a service type of the UE.

The capability grade can comprise one of the following types: supporting an enhanced F-DPCH, and not supporting the enhanced F-DPCH; and/or the service type can comprise one of the following types: an 2 ms TTI E-DCH, an 10 ms TTI E-DCH, and an R99.

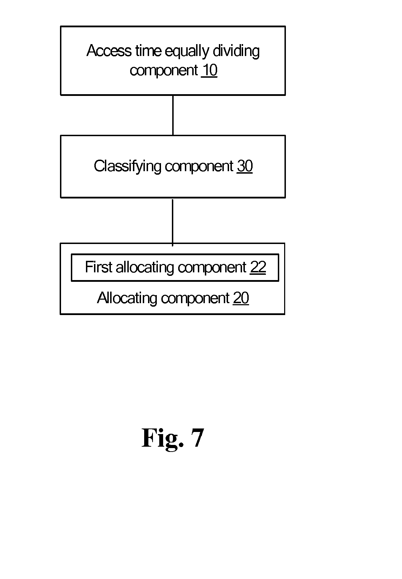

Corresponding to the capability grade and service type introduced in the foregoing, the RNC allocating the corresponding τ_{DPCH} or τ_{F-DPCH} according to the type of the UE can be achieved by the following preferred embodiments. It is a second particular structural block diagram of a device for allocating a code offset as shown in Fig. 7, and asides form the device comprises the each component introduced in Fig. 6, the allocating component **20** thereof further comprises:
a first allocating component **22,** configured to be that, based on that the capability grade of the UE is the supporting the enhanced F-DPCH and the service type is the 2 ms TTI E-DCH or the 10 ms TTI E-DCH, the τ_{DPCH} or τ_{F-DPCH} which is allocated for the UE is evenly distributed in a header of a first timeslot of any set of access time. Or,
a second allocating component, configured to be that, based on that the capability grade of the UE is the not supporting the enhanced F-DPCH and the service type is the 2 ms TTI E-DCH, the τ_{DPCH} or τ_{F-DPCH} which is allocated for the UE is evenly distributed in a first timeslot of any set of access time. Or,
a third allocating component, configured to be that, based on that the capability grade of the UE is the not supporting the enhanced F-DPCH and the service type is the 10 ms TTI E-DCH, the τ_{DPCH} or τ_{F-DPCH} which is allocated for the UE is evenly distributed in a first timeslot of any set of access time, or evenly distributed in any timeslot apart from the first timeslot of any set of access time. Or,
a fourth allocating component, configured to be that, based on that the service type of the UE is the R99, the τ_{DPCH} or τ_{F-DPCH} which is allocated for the UE is evenly distributed in a first timeslot of any set of access time, or evenly distributed in any timeslot apart from the first timeslot of any set of access time.

The Fig. 7 is described with the example that the allocating component **20** comprises a first allocating component **22.**

From the description above, it can be seen that a code offset τ_{DPCH} or τ_{F-DPCH} is allocated correspondingly according to the type of a UE in the present invention, which uplink subframe boundaries of which TDM UEs reach a Node B is aligned as much as possible, thereby reducing the interference among the TDM UEs, improving the system throughput, and being unable to severely affect the performance of the downlink as well.

Apparently, those skilled in the art shall understand that the above components and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit component respectively, or a plurality of components or steps thereof are made into one integrated circuit component. In this way, the present invention is not restricted to any particular hardware and software combination.

The above description is only preferred embodiments of the present invention and is not intended to limit the present invention, and the present invention can have a variety of changes and modifications for ordinary person skilled in the field. Any modification, equivalent replacement, or improvement made within the spirit and principle of the present invention shall all fall within the protection scope of the present invention.

## Claims

1. A method for allocating a code offset, **characterized by** comprising:
a Radio Network Controller (RNC) equally dividing the access time of a User Equipment (UE) into one or more sets of access time which are not overlapped with one another, wherein each set of access time comprises one or more timeslots; and
the RNC allocating a corresponding code offset τ_{DPCH} or τ_{F-DPCH} according to the type of the UE, wherein the τ_{DPCH} or τ_{F-DPCH} is located in the timeslot in the access time of the UE.

2. The method according to claim 1, **characterized in that**, before the RNC allocating τ_{DPCH} or τ_{F-DPCH} for different types of the UE accordingly, the method further comprising:
the RNC classifying the UE according to a capability grade and/or a service type of the UE.

3. The method according to claim 2, **characterized in that**, the capability grade comprises one of the following types: supporting an enhanced fractional dedicated physical channel (F-DPCH), and not supporting the enhanced F-DPCH; and/or the service type comprises one of the following types: a 2 ms TTI enhanced dedicated channel (E-DCH), a 10 ms TTI E-DCH, and an R99.

4. The method according to claim 3, **characterized in that**, the RNC allocating the corresponding τ_{DPCH} or τ_{F-DPCH} according to the type of the UE comprises:
base on that the capability grade of the UE is the supporting the enhanced F-DPCH and the service type is the 2 ms TTI E-DCH or the 10 ms TTI E-DCH, the τ_{DPCH} or τ_{F-DPCH} which is allocated for the UE by the RNC is evenly distributed in a header of a first timeslot of any set of access time.

5. The method according to claim 3, **characterized in that**, the RNC allocating the corresponding τ_{DPCH} or τ_{F-DPCH} according to the type of the UE further comprises:
based on that the capability grade of the UE is the not supporting the enhanced F-DPCH and the service type is the 2 ms TTI E-DCH, the τ_{DPCH} or τ_{F-DPCH} which is allocated for the UE by the RNC is evenly distributed in a first timeslot of any set of access time.

6. The method according to claim 3, **characterized in that**, the RNC allocating the corresponding τ_{DPCH} or τ_{F-DPCH} according to the type of the UE further comprises:
based on that the capability grade of the UE is the not supporting the enhanced F-DPCH and the service type is the 10 ms TTI E-DCH, the τ_{DPCH} or τ_{F-DPCH} which is allocated for the UE by the RNC is evenly distributed in a first timeslot of any set of access time, or evenly distributed in any timeslot apart from the first timeslot of any set of access time.

7. The method according to claim 3, **characterized in that**, the RNC allocating the corresponding τ_{DPCH} or τ_{F-DPCH} according to the type of the UE further comprises:
based on that the service type of the UE is the R99, the τ_{DPCH} or τ_{F-DPCH} which is allocated for the UE by the RNC is evenly distributed in a first timeslot of any set of access time, or evenly distributed in any timeslot apart from the first timeslot of any set of access time.

8. A device for allocating a code offset, **characterized by** comprising:
an access time equally dividing component, configured to equally divide the access time of a User Equipment (UE) into one or more sets of access time which are not overlapped with one another, wherein each set of access time comprises one or more timeslots; and
an allocating component, configured to allocate a corresponding code offset τ_{DPCH} or τ_{F-DPCH} according to the type of the UE, wherein the τ_{DPCH} or τ_{F-DPCH} is located in the timeslot in the access time of the UE.

9. The device according to claim 8, **characterized in that**, the device further comprises:
a classifying component, configured to classify the UE according to a capability grade and/or a service type of the UE.

10. The device according to claim 9, **characterized in that**, the capability grade comprises one of the following types: supporting an enhanced F-DPCH, and not supporting the enhanced F-DPCH; and/or the service type comprises one of the following types: an 2 ms TTI E-DCH, an 10 ms TTI E-DCH, and an R99.

11. The device according to claim 10, **characterized in that**, the allocating component comprises:
a first allocating component, configured to be that, based on that the capability grade of the UE is the supporting the enhanced F-DPCH and the service type is the 2 ms TTI E-DCH or the 10 ms TTI E-DCH, the τ_{DPCH} or τ_{F-DPCH} which is allocated for the UE is evenly distributed in a header of a first timeslot of any set of access time.

12. The device according to claim 10, **characterized in that**, the allocating component further comprises:
a second allocating component, configured to be that, based on that the capability grade of the UE is the not supporting the enhanced F-DPCH and the service type is the 2 ms TTI E-DCH, the τ_{DPCH} or τ_{F-DPCH} which is allocated for the UE is evenly distributed in a first timeslot of any set of access time.

13. The device according to claim 10, **characterized in that**, the allocating component further comprises:
a third allocating component, configured to be that, based on that the capability grade of the UE is the not supporting the enhanced F-DPCH and the service type is the 10 ms TTI E-DCH, the τ_{DPCH} or τ_{F-DPCH} which is allocated for the UE is evenly distributed in a first timeslot of any set of access time, or evenly distributed in any timeslot apart from the first timeslot of any set of access time.

14. The device according to claim 10, **characterized in that**, the allocating component further comprises:
a fourth allocating component, configured to be that, based on that the service type of the UE is the R99, the τ_{DPCH} or τ_{F-DPCH} which is allocated for the UE is evenly distributed in a first timeslot of any set of access time, or evenly distributed in any timeslot apart from said first timeslot of any set of access time.
